Europäisches Patentamt

European Patent Office

Office européen des brevets

(11) Publication number: **0 428 937 A1**

# EUROPEAN PATENT APPLICATION

(21) Application number: 90121293.6

(51) Int. Cl.5: **C09D 5/00**, A01G 9/14

(22) Date of filing: 07.11.90

(30) Priority: 20.11.89 IL 92372

(43) Date of publication of application:
29.05.91 Bulletin 91/22

(84) Designated Contracting States:
AT BE CH DE DK ES FR GB GR IT LI LU NL SE

(71) Applicant: **State of Israel Ministry of Defence Armament Development Authority**
**P.O. Box 2550**
**Haifa(IL)**

(72) Inventor: **Calahorra, Arie**
**3 Hazajit Street**
**Kiryat Motzkin(IL)**
Inventor: **Aharony, Dan**
**21 Michael. Street**
**Kfar Bialik(IL)**

(74) Representative: **Kraus, Walter, Dr. et al**
**Patentanwälte Kraus, Weisert & Partner**
**Thomas-Wimmer-Ring 15**
**W-8000 München 22(DE)**

(54) Coatings for greenhouses and the like.

(57) Liquid coating compositions, for application to transparent sheetings such as used in structures employed in agriculture and the like. The coatings are applied by spraying or brushing and prevent extreme temperatures (both frost and overheating) at the interior of the structures. The coatings are easily applicable, and can be easily washed off. Coatings of this type advantageously contain reflective particles, possibly in combination with other components which modify transmission of solar radiation into such structures and radiation from such structures to the outside.

EP 0 428 937 A1

## FIELD OF THE INVENTION:

The invention relates to coating compositions for the temporary application to agricultural structures, such as greenhouses and tunnels, in order to prevent inside such structures extreme temperatures, either during outside frost conditions or during outside heatwaves. The liquid compositions can easily be applied, and are also easily removable The compositions comprise a suitable liquid polymeric matrix which contains the active ingredient, which is in the form of a reflective pigment such as platelets of metallic aluminum or in the form of titanium-dioxide coated mica platelets, if desired in admixture with one or more additives such as IR absorbants, fluorescent materials or the like. Application, by spraying, brushing or the like is easy and rapid, and when not required any longer, such coatings can be simply washed off.

## BACKGROUND OF THE INVENTION:

One of the most acute problems encountered in this field is the relative poor heat retention capability, especially important on frosty nights. On the other hand, high visible light transmissibility, especially in arid zones, cause extremely high temperatures inside greenhouses and plastic tunnels built with conventional polyethylene sheets bringing about problems of ventilation and need for cooling the plants. The common way of improving heat retention is by incorporating various optically active fillers into the polymeric sheet material. These fillers absorb infrared radiation, thus partially preventing the escape of heat by radiation from the space confined by the plastic tunnel or greenhouse.

Among the most known fillers of this kind there are: borax, borate and carbonate salts of calcium, magnesium or zinc; talc, barium sulphate, magnesium oxide, etc. (See, for example, U.S. Patents 4,423,164, 4,559,

When prevention of overheating due to sunlight radiation is needed, evaporating a thin metal film onto the plastic sheet was suggested for architectural purposes, along with a laminated plastic film into which a very small concentration of metal particles was incorporated. (See, for example, U.S. Patent 3,876,552).

Other common solutions are various methods of shading and heating. Solutions of this kind suffer from practical and economic drawbacks, as the grower must keep the relatively costly sheets in stock and use them through the entire season, just to be ready for a relatively short period of extremely low temperatures, while the problem of too high temperatures remains unresolved and he has to take the trouble of shading or upfolding the sheets to prevent overheating.

## SUMMARY OF INVENTION :

The present invention provides a temporary coating that can be applied by standard means, such as a simple spraying, brushing or the like, just when frosty or too high temperatures are forecast.

When the extreme conditions are over,the coating can be removed by simply washing it off, such as with a water jet.

Applying these coatings enables the user to prevent extreme inside temperatures, either too low or too high ones, in agricultural structures. This makes it possible to avoid plant damage due to frost or overheating.

The novel coating compositions can be applied by standard spraying equipment and can be removed when the danger of extreme temperatures is over.

Furthermore, the degree of visible light transmission, its spectrum and the duration; the coating is to remain in the plastic sheet, can be adjusted at will.

As matrix there can be used a wide variety of polymers and copolymers of the type generally used in coating technology. There may be used suitable alkyd resins, vinyl resins, epoxies, polyurethane, acrylics, chlorinated rubber, polycarbonates, polyesters and copolymers of any of these. The above can be used in conjunction with suitable solvents, which ought to be compatible with the polymer, yet not to be harmful to the agricultural sheet material. Solvents can be of the aliphatic or aromatic type, and their nature is a matter of choice.

Generally the compositions will contain one or more auxiliaries such as drying agents, antioxidants, dispersants, plasticizers and the like. Based on parts by weight, compositions of the invention contain typically from about 20 to 50 parts binder, 5 to 20 parts solvents, 0.5 to 3 parts additives, 2 to 15 parts plasticizer, and from about 2 to 20 parts reflective particles (pigments). The compositions can contain as further additive from about 1 to 20 parts of a suitable fine particle size carbonate such as Ca, Mg, Ba, Mg, Zn carbonate; magnesium oxide, barium sulfate, borax etc., or a mixture of any of these. These additives enhance heat retention inside the agricultural structures. There can also be used instead of these, or in addition, a suitable quantity, generally from 1 to 10 parts, of a suitable fluorescent material which coverts the wavelength of incident radiation to a more desired one.

Generally the aluminum flakes or platelets will be of the order of microns, and preferably in the 10 to 100 μ size range. $TiO_2$-coated mica is commercially available, and is a very efficient reflective agent.

The same treatment can also keep temperatures in greenhouses and tunnels, during hot and clear sky season, lower by at least 1-6°C, than temperatures measured under an untreated plastic sheet. The efficiency of the treatment defined the temperature difference measured under coated and under uncoated plastic sheets. This can be regulated by the concentration of the reflective pigment while adhesion of the coating to the plastic sheet can be adjusted to desired values by special ingredients, and thus duration of coating action can be predetermined.

The invention will be further illustrated and more specific details will be presented in the following examples; all parts and percentages are by weight

Typical coatings of the present invention comprise (parts being parts by weight) in combination, from about 20 to 50 parts of a polymeric binder, a pigment of the aluminum pigment type from about 0.5 to about 20 parts, titanium coated mica from zero to about 20 parts, as optional additive calcium carbonate or a material imparting similar properties - zero to about 30 parts, a plasticizer from zero to about 15 parts, and this in addition to various optional auxiliaries, such as solvent from about zero to 20 parts, metallic drier, anti-skinning agent, etc.

The polymeric binder can be in the form of a solution of a suitable polymer or copolymer. It can be in the form of an emulsion, preferably in water; and there can also be added agents such as thickeners and the like.

The following examples are intended to illustrate the invention by way of example only: parts being by weight :

| Example 1 : | |
|---|---|
| Polymeric binder | 35 parts |
| Solvents | 12 parts |
| Aluminum pigment paste | 8 parts |
| Titanium coated mica | 12 parts |
| Calcium carbonate | 15 parts |
| Plasticizer | 6 parts |

| Example 2 : | |
|---|---|
| Oil modified alkyl resin | 40 parts |
| Xylene | 10 parts |
| Metallic drier | 2 parts |
| Anti-skinning agent | 0.2 parts |
| Aluminum paste | 17 parts |
| Calcium carbonate | 20 parts |
| Plasticizer | 10 parts |

| Example 3 : | |
|---|---|
| Acrylic copolymer emulsion | 36 parts |
| Plasticizer | 10 parts |
| Water | 20 parts |
| Cellulosic thickener | 0.2 parts |
| Wetting agent | 0.8 parts |
| Aluminum pigment | 10 parts |
| Magnesium carbonate | 15 parts |

Experiments were carried out to test the efficacy of some of the compositions of the invention. The following results were obtained with a coating prepared according to Example No. 2, above. The coating composition was applied by brushing to the material (polyethylene) of an agricultural tunnel. The coating had an average thickness of about 30-70$\mu$ after drying.

The comparison was made between tunnels with uncoated polyethylene and polyethylene-coated as defined above. Temperatures were measured in February 1989 in the coastal plain of Israel and typical results are presented in Table I.

TABLE I

| Comparison of coated, with uncoated polyethylene agricultural tunnels (in degrees Centigrade) : | | | | | | |
|---|---|---|---|---|---|---|
| Test No. | Minimum Temperatures °C | | | Maximum Temperatures | | |
| | uncoated | coated | T-diff'. | uncoated | coated | T-diff' |
| 1 | 1.5 | 5.5. | 4 | 31 | 29 | -2 |
| 2 | 4 | 6 | 2 | 42 | 39 | -3 |
| 3 | 2.5 | 5.5 | 3 | 32 | 29 | -3 |
| 4 | 2.5 | 4.5 | 2 | 31 | 27.5 | -3.5 |
| 5 | 3 | 5.5 | 2.5 | 36.5 | 33 | -3.5 |
| 6 | 4 | 6 | 2 | 39 | 29 | -10 |
| 7 | 4.5 | 6 | 1.5 | 39.5 | 34.5 | -5.5 |
| 8 | 8.5 | 9.5 | 1 | 40.5 | 34 | -6.5 |

**Claims**

1 . A liquid coating composition which can be applied by spraying or brushing to sheeting of the type used in agricultural structures such as greenhouses and tunnels, so as to prevent frost damage on especially cold or overheating during extremely hot external temperatures, which compositions are based on a carrier which contains reflective particles, optionally in combination with other additives and auxiliaries, and which coatings are removable at will by washing them off with water.

2. A composition according to claim 1, where the reflective particles are aluminum particles and/or $TiO_2$-coated mica flakes.

3. A composition according to claim 1 or 2, which contains as further ingredient a substance adapted to modify the transmission of solar radiation into or from the agricultural structure ,selected from carbonates or oxides of calcium, magnesium, barium, zinc, barium sulfate, borax, or a mixture of any of these.

4. A composition according to any of claims 1 to 3, which contains as additive a quantity of a compatible fluorescent material.

5. A composition according to any of claims 1 to 4, where the matrix is a solvent based or water-based organic binder, possibly in the form of a water-based emulsion.

6. A composition according to any of claims 1 to 5, which contains front 1 to 25 parts by weight of reflective

4

particles.

7. Coating compositions for temporary application to greenhouses, tunnels and the like, so as to prevent extreme interior temperatures, substantially as herein described and with reference to any of the Examples,

8. Greenhouses, tunnels or other agricultural structures provided with a coating claimed in any of claims 1 to 7.

9. A method for the prevention of damage to agricultural crops cultivated in greenhouses, tunnels or the like, during extreme external weather conditions such as frost or heat-waves, which comprises applying to such agricultural structures an adequate coating of a composition as claimed in any of claims 1 to 7.

10. A method as claimed in claim 9, where the application is by means of brushing or spraying.

11. A method as claimed in claim 9 or 10, where the coating is removed after use by a simple water jet.

12. Method of preventing or substantially reducing crop damage during frosts or heat-waves in agricultural structures, substantially as hereinbefore described.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4346149 (GULFKO INCORPORATED) <br> * column 2, lines 3 - 8; claims 1, 3-7 * <br> --- | 1, 2, 5, 6, 9-11 | C09D5/00 <br> A01G9/14 |
| A | EP-A-149584 (RHONE-POULENC FILMS) <br> --- | | |
| A | PATENT ABSTRACTS OF JAPAN <br> vol. 11, no. 361 (C-459)(2808) 25 November 1987, <br> & JP-A-62 132963 (MITSUI TOATSU CHEM INC) 16 June 1987, <br> * the whole document * <br> ----- | | |

TECHNICAL FIELDS
SEARCHED (Int. Cl.5 )

C09D
A01G

The present search report has been drawn up for all claims

| Place of search | Date of completion of the search | Examiner |
|---|---|---|
| THE HAGUE | 22 FEBRUARY 1991 | BUSCAGLIONE Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document